# EUROPEAN PATENT APPLICATION

(11) **EP 4 800 218 A1**
(43) Date of publication of application: **02.09.2026**
(21) Application number: 23956706.8
(22) Date of filing: 25.10.2023
(51) Int. Cl.: E21B 37/04, G01V 1/137, B08B 5/02

(54) **SONIC PULSE EMITTING DEVICE USING ULTRA-FAST RELEASE OF A CHAMBER WITH PRESSURISED GAS**

(71) Applicant: Fadelpo, S.L., 29006 Málaga (ES)
(72) Inventor: DEL CAMPO CASTAÑEDA, Lino Francisco, 29018 Málaga (ES); JIMENEZ MARTINEZ, Alberto, 03540 Alicante (ES)
(74) Representative: Temiño Ceniceros, Ignacio
(86) International application number: PCT/ES2023/070628
(87) International publication number: WO 2025/088227

(57) **Abstract**

The present invention relates to a sonic pulse emitting device using ultra-fast release of a chamber with pressurised gas, the device comprising a casing with an accumulation chamber that can be connected to a duct with a gas source; a piston with a head and a rod oriented towards the accumulation chamber; a trigger chamber in which the head of the piston moves, communicated with the accumulation chamber by a bore; an intermediate chamber connected to the bore and configured to be filled with gas faster than the trigger chamber; a discharge chamber in the head that is open to the exterior;
and wherein there is a first position in which the head covers an exhaust port array, a second position in which the head is close to the accumulation chamber, and an intermediate position in which the intermediate chamber is communicated with the discharge chamber.

## Description

### TECHNICAL FIELD

The present invention relates to a sonic pulse emitting device using sudden release of a pressurised gas chamber. This device is used for cleaning filters in boreholes and wells, fluid transport pipes, and for stimulating aquifer formation, among other applications.

This type of device is known in the art as a sonic air gun.

### STATE OF THE ART

It is known in the prior art that sonic pulse emitting devices exist, which can be used, for example, in seismic ground surveys. An example of the art can be found in US5315917. These devices generate a sonic pulse by forcefully expelling pressurised air.

The use of similar devices is also known for well rehabilitation, for example, allowing filters installed in the well to be cleaned.

Devices of this type require a number of variables to be controlled: trigger pressure and control during operation, pulse frequency, direction, amplitude and length of the shock wave.

There are other sonic pulse emitting products available on the market, such as the one known as Hydropulse. These products often only reach up to 100 bar. Some, such as Air-Shock and Air-Burst, reach 210 bar, but this is still below the required pressure for certain applications.

Similarly, the output of the pulse is very important; the output must be as perpendicular as possible to the device/pipe in order to achieve maximum pulse performance. This ensures, firstly, that there are no unwanted movements or stresses on the device or its mounting, and secondly, that the energy reaches the surface to be treated perpendicularly, striking with 100% of its energy. Among the products mentioned, only Air-Bust achieves the correct angle; the others have an angle of around 45°. In addition to the direction of the pulse, the amplitude thereof depends on the opening speed of the trigger chamber. A slow speed lengthens the wave and reduces the amplitude.

Similarly, the frequency of the pulses needs to be controlled. It must be low enough to allow the gas from the previous pulse to escape. The frequency depends on the gas discharge time, which in turn depends on the flow rate emitted by the pulse, the diameter and angle of the pipe, etc. It should generally be less than 0.25 Hz (one pulse every 4 seconds or more). Otherwise, the liquid-gas mixture increases the damping, as it is compressible and causes reflection and refraction at the edges of the bubbles. The known products do not make it possible to modify the frequency, or doing so is extremely complicated. As such, the Hydropulse requires complex operations, which are practically impossible, to adjust the gas flow rate and, consequently, the frequency. The Air-Shock product does not allow the frequency to be adjusted. Lastly, Air-Burst is the only product with a degree of frequency control, which is controlled from the surface via a solenoid valve.

Both Hydropulse and Air-shock discharge gas from the intermediate chamber and the trigger chamber through the same port, such that the prior outlet of gas affects the efficiency of the shock wave or pulse.

The operating parameters must be adjustable from the surface, in order to adapt them to the operating depth and the quality of the linings/pipes, filter types and aquifer formations, as well as the objectives of the work.

In view of the disclosure of the prior art, the applicant is unaware of any solution to these problems that is as effective as the one claimed.

The device has a default preset frequency of between 4 and 9 seconds per pulse, which is suitable for most situations. However, it can be modified beforehand depending on the work to be performed. The frequency is modified by changing internal elements to change the cross-section of the internal passages thereof, and it is therefore possible to make the adjustment on the surface before work begins.

### BRIEF EXPLANATION OF THE INVENTION

The invention is a sonic pulse emitting device using ultra-fast release of a chamber with pressurised gas according to the claims. **In** its various embodiments, it solves the problems posed of the prior art.

The pressurised gas trigger device comprises a casing that can be connected to a pipe from a gas source, usually compressed air. **It** also comprises:
- An accumulation chamber that can be connected to the pipe.
- A piston with a head and a rod. This rod is oriented towards the accumulation chamber.
- A trigger chamber through which the head of the piston moves. The trigger chamber is communicated with the accumulation chamber through a bore longitudinal to the piston. The trigger chamber has an exhaust port array leading to the outside, ideally around the entire perimeter.
- An intermediate chamber, at the height of the rod of the piston and in contact with the head. **It** is connected to the bore for filling with gas. Furthermore, it is configured to be filled with gas faster than the trigger chamber, due to the size or cross section of the communication with the bore.
- A discharge chamber at the height of the head, and open to the outside.

All these elements are configured in such a way that
- The piston is movable between two end positions, a first position, or charging position, in which the head covers the exhaust port array, and a second position, or trigger position, in which the head is closer to the accumulation chamber. **In** this second position, the exhaust port array is communicated with the trigger chamber.
- Furthermore, it has an intermediate position, close to the first position, in which the intermediate chamber is communicated with the discharge chamber.

In this way, the intermediate chamber is emptied by the discharge chamber, which is located away from the exhaust port array. Furthermore, due to the necessary design, given that the flow always comes from above, the discharge chamber is located above the trigger chamber, and the gas it releases does not descend to the sonic pulse emitting area.

All the models mentioned are based on a three-chamber design. However, the device of the invention has four chambers, the intermediate discharge chamber being particularly relevant. In this way, the discharge port of the trigger chamber is not shared with the prior discharge from the intermediate chamber, thereby preventing gas from being emulsified in the water just before the triggering and avoiding attenuation caused by gas compression.

This sonic air gun construction enables rehabilitation and work to be carried out in small-sized pipes. This is made possible due to the small diameter of the device and its higher effective power compared to other designs. This means that work can also be carried out in wells with very high hydrostatic pressure.

The device can reach a pressure of 400 bar prior to triggering and open the trigger chamber in less than 0.8 milliseconds, such that the energy transmitted in the pulse is maximised.

Other variants are set out in the independent claims and are described below.

It should be noted that, throughout the description and claims, the term "comprises" and its variants are not intended to exclude other technical features or additional elements.

### DESCRIPTION OF THE FIGURES

In order to complete the description and to help make the features of the invention more readily understandable, a set of figures and drawings is presented wherein the following is represented by way of illustration and not limitation:
Fig. 1: Cross section of an exemplary embodiment in the charging position or first position.
Fig. 2: Cross section of the previous example in the trigger position or second position.

### DETAILED DESCRIPTION OF AN EMBODIMENT OF THE INVENTION

Various embodiment of the invention is briefly described below, as an illustrative and nonlimiting example thereof.

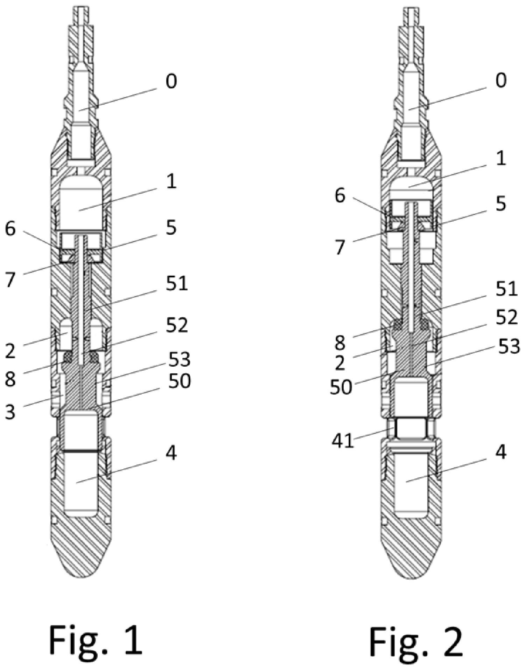

Figure 1 shows a cross-sectional view of an exemplary embodiment of the invention in the closed position. Part of a casing connected to a stud or guide pin for placement in the borehole at the desired depth, containing a gas pipe (0) from a remote source, usually on the surface. This source could be a tank, a compressor, etc. without this being relevant to the invention.

The gas arrives from the pipe (0) to an accumulator chamber (1), which stores same. The pressure in the accumulator chamber (1) is always equal to the working pressure, as it is communicated with the pipe (0). A piston (5) is pushed by the pressure in the accumulator chamber (1) against a trigger chamber (4). The piston (5) has a wider head (50) oriented towards the trigger chamber (4) and a rod (51) that arrives at the accumulation chamber (1). A through-bore (52) communicates the accumulation chamber (1) with the trigger chamber (4). The head (50) shown is cup-shaped, with the open side towards the trigger chamber (4) to maximise its lateral surface, which controls the outlet of gas through the side, while reducing weight.

The trigger chamber (4) is designed in this way to ensure that the pulse is emitted radially, which is the key feature that differentiates our equipment. The radial outlet is achieved due to the fact that, at the opening of the gas release chamber, the gas circulates in the opposite direction (vertically in the figures). On the one hand, the inverted cup of the piston forms half of the trigger chamber and the lower casing forms the other half of the trigger chamber. The gas flow therefore circulates vertically and in the opposite direction to exit through the discharge port, with the result that the emission outlet is perpendicular to both flows and is therefore radial.

The device also has an intermediate chamber (2) through which the rod (51) passes, in front of the widening of the piston (5). One or more small holes in the rod (5) communicate the bore (52) with the intermediate chamber (2), such that it slowly fills with gas as the gas reaches the accumulation chamber (1). The intermediate chamber (2) is close to a discharge chamber (3) that is open to the outside via a series of ports around its perimeter. This discharge chamber (3) is arranged at the height of the head (50) of the piston (5), in a recess (53) therein, and any gas or fluid in this discharge chamber (3) does not affect the piston, as any thrust exerted on the piston (5) on both side of the recess (53) is balanced.

The trigger chamber (4) is divided into two parts. The first part is the stroke of the piston (5), and the second part is located in the lower area of the casing. An exhaust port array (41) is covered by the head (50) of the piston (5) when it is in the first position, the charging position, as shown in Figure 1. The exhaust port array (41) extends along the entire perimeter.

The trigger chamber (4) is charged via the bore (52). While the trigger is being prepared, the piston (5) remains in the closed position as it is subjected to thrust by the accumulation chamber (1) and the intermediate chamber (2) on one side, and by the trigger chamber (4) on the other. The intermediate chamber (2) is designed to fill with gas faster than the trigger chamber (4), due to its size or due to the passage of fluid towards it; consequently, it fills first and assists the accumulation chamber (1) at the start. This may be due to a smaller size than the trigger chamber (4), a gas inlet with a larger cross section, or a combination of both features.

The trigger chamber (4) is opened by a slight retraction of the piston (5), thereby opening the communication of the intermediate chamber (2) with the discharge chamber (3) to allow the outlet of its contents. This communication is larger than the inlet hole to the intermediate chamber (2), resulting in a rapid discharge of pressure from the intermediate chamber (2). At that moment, only the accumulation chamber (1) withstands the thrust from the trigger chamber (4), and the piston (5) returns fully very quickly. When the piston (5) moves upwards, the head (50) ceases to cover the exhaust port array (41) and the gas retained in the trigger chamber (4) is released radially outside the device at supersonic speed, thereby creating the sonic pulse (Figure 2). This sonic pulse strikes the filter of the underground well (that is, the expansion phase of the pulse) and then contracts radially inwards (that is, the contraction phase of the pulse), dislodging all scale, bacteria, residual drilling fluids and other impurities accumulated in the filter, emitting the sonic pulse with the effects described.

When the trigger chamber (4) is emptied, the piston (5) returns to the position shown in Figure 1, as only the thrust from the accumulation chamber (1) remains. In this way, the piston (5) is thrust downwards very quickly and the end-of-stroke is modulated by a pneumatic damper (6) located in the accumulation chamber (1). Similarly, during its return stroke, the pneumatic damper (6) reduces the speed of the piston (5) just before it reaches the starting position.

The pneumatic damper (6) helps to slow down the return movement of the piston (5) towards the starting position shown in Figure 1. In this figure, the damper (6) is close to the accumulation chamber (1), as this is the most suitable location. The damper (6) can be of any type. In Figure 1 it is a plate in a casing that allows gas to pass through easily in one direction but blocks it in the other. For example, the plate may have one or more unobstructed holes and one or more check valves. Consequently, the cross section of the passage through which the gas passes differs in both directions, meaning that its speed is different in both directions.

The piston (5) also features two damping rings (7, 8) that gently stop the movement of the piston (5) at its two end positions, acting as end-of-stroke. In Figure 1, an upper ring (7) attached to the piston (5) defines the stop in its insertion movement into the trigger chamber (4), while the lower ring (8) stops the return movement. Both rings (7,8) absorb any kinetic energy and may be made of rubber or another similar elastic material.

Therefore, the gas in the casing of the damper (6) must be discharged through a hole, and the speed at which the piston (5) moves towards the trigger chamber (4) at the end of the stroke depends on the gas discharge flow rate. When the upper ring (7) and the lower face of the chamber of the accumulator (1) come into contact with one another, the bottom of the stroke is reached and a full cycle of the trigger piston (5) is completed. This contact is gentle because the damper (6) has almost completely slowed the piston (5).

## Claims

1. A sonic pulse emitting device using ultra-fast release of a chamber with pressurised gas, comprising a casing that can be connected to a pipe (0) from a gas source, **characterised in that** it comprises:
an accumulation chamber (1) that can be connected to the pipe (0);
a piston (5) with a head (50) and a rod (51) oriented towards the accumulation chamber (1),
a trigger chamber (4) in which the head (50) of the piston (5) moves, communicated with the accumulation chamber by a bore (52) longitudinal to the piston (5), the trigger chamber (4) having an exhaust port array (41) leading to the outside;
an intermediate chamber (2) connected to the bore (52) and configured to be filled with gas faster than the trigger chamber (4), in contact with the head (50);
a discharge chamber (3) in a recess (53) in the head (50), open to the outside;
such that
the piston (5) is movable between two end positions, a first position in which the head (50) covers the exhaust port array (41) and a second position in which the head (50) is closer to the accumulation chamber (1) and the exhaust port array (41) is communicated with the trigger chamber (4); and
it has an intermediate position, close to the first position, in which the intermediate chamber (2) is communicated with the discharge chamber (3).

2. The sonic pulse emitting device using ultra-fast release of a chamber with pressurised gas, according to claim 1, **characterised in that** it comprises a damper (6) for the movement of the piston (5).

3. The sonic pulse emitting device using ultra-fast release of a chamber with pressurised gas, according to claim 1, **characterised in that** it comprises elastic end-of-stroke rings (7, 8) of the piston (5).
